# EUROPÄISCHE PATENTSCHRIFT

(11) **EP 3 487 617 B1**
(45) Veröffentlichungstag und Bekanntmachung des Hinweises auf die Patenterteilung: **08.09.2021**
(21) Anmeldenummer: 17737605.0
(22) Anmeldetag: 13.07.2017
(51) Int. Cl.: B01J 23/42, B01J 23/44, B01J 35/00, B01J 35/04, B01J 23/58, B01J 37/02, B01D 53/94, F01N 3/28, F01N 3/10

(54) **DIESELOXIDATIONSKATALYSATOR**
DIESEL OXIDATION CATALYST
CATALYSEUR D'OXYDATION POUR DIESEL

(30) Priorität: 19.07.2016 EP 16180191
(43) Veröffentlichungstag der Anmeldung: 29.05.2019
(73) Patentinhaber: Umicore AG & Co. KG, 63457 Hanau-Wolfgang (DE)
(72) Erfinder: HENGST, Christoph, 35510 Butzbach (DE); REITH, Christoph, 97786 Motten (DE); SCHIFFER, Michael, 63450 Hanau (DE)
(86) Internationale Anmeldenummer: PCT/EP2017/067651
(87) Internationale Veröffentlichungsnummer: WO 2018/015259

(56) Entgegenhaltungen:
- EP-A1- 2 695 674
- EP-B1- 2 763 791
- WO-A1-2010/133309
- US-A1- 2008 045 405
- US-A1- 2012 124 975
- US-A1- 2013 149 222

## Beschreibung

Die vorliegende Erfindung betrifft einen Oxidationskatalysator zur Reinigung der Abgase von Dieselmotoren.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren.

Während zur Entfernung der Partikelemissionen Dieselpartikelfilter mit und ohne katalytisch aktive Beschichtung geeignet sind und Stickoxide beispielsweise durch selektive katalytische Reduktion (Selective Catalytic Reduction SCR) an einem sogenannten SCR-Katalysator zu Stickstoff umgesetzt werden können, werden Kohlenmonoxid und Kohlenwasserstoffe durch Oxidation an einem geeigneten Oxidationskatalysator unschädlich gemacht.

Oxidationskatalysatoren sind in der Literatur umfangreich beschrieben. Es handelt sich dabei beispielsweise um sogenannte Durchflusssubstrate aus Keramik oder Metall, die als wesentliche katalytisch aktive Bestandteile Edelmetalle, wie Platin und Palladium, auf hochoberflächigen, porösen, hochschmelzenden Oxiden, beispielsweise Aluminiumoxid, tragen.

Es sind auch bereits zonierte Oxidationskatalysatoren beschrieben, die in Fließrichtung des Abgases Materialzonen unterschiedlicher Zusammensetzung aufweisen, mit denen das Abgas nacheinander in Kontakt tritt.

So beschreiben US2010/257843, US2011/099975 und WO2012/079598 A1 zonierte Oxidationskatalysatoren, die Platin und Palladium enthalten. Auch WO2011/057649 A1 beschreibt Oxidationskatalysatoren, wobei diese in gelayerten und gezonten Ausführungsformen verwendet werden können. Im Falle der gezonten Ausführungsformen weist die zweite Zone, d.h. die Zone mit denen das abströmende Abgas in direktem Kontakt steht, einen höheren Edelmetallgehalt auf, als die vordere Zone, die mit dem einströmenden Abgas in direktem Kontakt steht. Die Oxidationskatalysatoren gemäß WO2011/057649 haben insbesondere die Aufgabe, für einen abströmseitigen SCR-Katalysator ein optimales Verhältnis von NO zu NO₂ einzustellen.

Weitere Oxidationskatalysatoren sind in WO2010/133309 A1, WO2013/050784 A2, US2008/045405, WO2012/137930 A1 und WO2012/071421 A2 offenbart.

Die EP2000639A1 beschreibt Oxidationskatalysatoren, die neben Platin ein Oxid eines Metalls enthalten, das ausgewählt ist aus Magnesium, Erdalkalimetall und Alkalimetall. Der Katalysator hat die Funktion, die Abgastemperatur bei Kraftstoffeinspritzung zu erhöhen.

Die Abgastemperaturen gegenwärtiger und zukünftiger Dieselmotoren der Abgasgesetzgebung Euro 5, 6 und 6+ werden durch Kraftstoffeinsparungen zur Senkung des CO₂-Ausstosses immer niedriger. Umso wichtiger ist es, Dieseloxidationskatalysatoren zur Verfügung zu haben, die bei den niedrigen Abgastemperaturen einen ausreichenden CO-Light Off aufweisen. Die bisher bekannten Dieseloxidationskatalysatoren erfüllen diese Bedingung nicht in ausreichendem Maße, so dass Bedarf nach entsprechender Weiterentwicklung besteht.

Es wurde nun festgestellt, dass die nachstehend beschriebenen und definierten Dieseloxidationskatalysatoren diese Bedingungen erfüllen.

Die vorliegende Erfindung betrifft einen Dieseloxidationskatalysator, der einen Tragkörper mit einer Länge L, die sich zwischen einer ersten Stirnfläche a und einer zweiten Stirnfläche b erstreckt und auf dem Tragkörper angeordnete, unterschiedlich zusammengesetzte katalytisch aktive Materialzonen A und B umfasst, wobei
- Materialzone A Palladium oder Platin und Palladium in einem Gewichtsverhältnis Pt : Pd von ≤ 1 enthält und sich ausgehend von Stirnfläche a auf 20 bis 80% der Länge L erstreckt, und
- Materialzone B Platin und Palladium in einem Gewichtsverhältnis Pt : Pd von < 10 enthält, und sich auf 80 bis 100% der Länge L erstreckt, und
wobei Materialzone B über Materialzone A angeordnet ist und das Gewichtsverhältnis Pt : Pd bezogen auf die Materialzonen A und B 1,5 bis 3,0 beträgt, und
wobei der Tragkörper ein Durchflusswabenkörper ist.

In Ausführungsformen des erfindungsgemäßen Oxidationskatalysators sind Palladium beziehungsweise Platin und Palladium in den Materialzonen A und B auf einem oder mehreren Trägeroxiden aufgebracht. Diese Trägeroxide sind vorteilhafterweise hochschmelzend, d.h. ihr Schmelzpunkt liegt mit ausreichendem Abstand über den beim bestimmungsgemäßen Betrieb des erfindungsgemäßen Oxidationskatalysators auftretenden Temperaturen. Die Trägeroxide sind außerdem vorteilhafterweise hochoberflächig und weisen bevorzugt spezifische Oberflächen von 50 bis 200 m²/g auf.

Die Trägeroxide in den Materialzonen A und B können gleich oder verschieden sein.

Geeignete Trägeroxide sind ausgewählt sind aus der Reihe bestehend aus Aluminiumoxid, dotiertes Aluminiumoxid, Siliziumoxid, Titandioxid und Mischoxiden aus einem oder mehreren davon.

Dotierte Aluminiumoxide sind beispielsweise Siliziumoxid-, Zirkoniumoxid- und/oder Titanoxid-dotierte Aluminiumoxide. Mit Vorteil wird Lanthanstabilisiertes Aluminiumoxid eingesetzt, wobei Lanthan in Mengen von 1 bis 10 Gew.-%, bevorzugt 3 bis 6 Gew.-%, jeweils berechnet als La₂O₃ und bezogen auf das Gewicht des stabilisierten Aluminiumoxides, verwendet wird.

In Ausführungsformen des erfindungsgemäßen Oxidationskatalysators umfasst Materialzone A ein Erdalkalimetall. Als Erdalkalimetall können Magnesium, Calcium, Strontium, Barium oder Mischungen von mindestens zwei dieser Metalle eingesetzt werden. Bevorzugt werden Strontium oder Barium eingesetzt.

Das Erdalkalimetall bzw. die Erdalkalimetalle liegen in der Regel in Form ihrer Oxide, Hydroxide oder Carbonate vor. Bevorzugt liegen sie in Form ihrer Oxide vor.

Das Erdalkalimetall wird mit Vorteil in einer Menge von 0,5 bis 5 Gew.-%, bezogen auf das Gewicht der Materialzone A und berechnet als MeO, worin Me für das Erdalkalimetall steht, verwendet.

Wird Strontium verwendet, so liegt es besonders bevorzugt in einer Menge von 1 bis 3 Gew.-%, bezogen auf das Gewicht der Materialzone A, vor. Wird dagegen Barium verwendet, so liegt es besonders bevorzugt in einer Menge von 2,5 bis 4,5 Gew.-%, bezogen auf das Gewicht der Materialzone A, vor.

Materialzone A enthält als Edelmetall ausschließlich Palladium oder es enthält Palladium und Platin, wobei das Gewichtsverhältnis Pt : Pd ≤ 1 ist, also beispielsweise 1 bis 0,15 beträgt.

Materialzone B enthält als Edelmetall Platin und Palladium in einem Gewichtsverhältnis Pt : Pd von < 10, also beispielsweise 3 bis 6. Insbesondere weist Materialzone B ein Gewichtsverhältnis Pt : Pd von < 6 auf.

Das Gewichtsverhältnis Pt : Pd bezogen auf die Materialzonen A und B beträgt beispielsweise 1,5 bis 2,4.

In Ausführungsformen des erfindungsgemäßen Oxidationskatalysators liegen die Materialzonen A und B unabhängig voneinander in Mengen von 50 bis 150 g/l, bezogen auf das Volumen des Tragkörpers, vor.

In Ausführungsformen des erfindungsgemäßen Oxidationskatalysators beträgt die Länge der Materialzone A 20 bis 70%, 40 bis 60% oder 45 bis 50% der Gesamtlänge L des Tragkörpers.

Materialzone B kann sich ausgehend von Stirnfläche a oder ausgehend von Stirnfläche b über 80 bis 100% der Länge L erstrecken. Bevorzugt erstreckt sich Materialzone B ausgehend von Stirnfläche b über 80 bis 100% der Länge L.

In Ausführungsformen des erfindungsgemäßen Oxidationskatalysators beträgt die Länge der Materialzone B 85%, 90%, 95% oder 100% der Gesamtlänge L des Tragkörpers.

Erfindungsgemäße Oxidationskatalysatoren können dadurch hergestellt werden, dass geeignete Tragkörper in an sich bekannter Weise mittels Beschichtungssuspensionen, sogenannten Washcoats, beschichtet werden. Zur Herstellung einer Beschichtungssuspension zur Herstellung der Materialzonen A oder B werden beispielsweise die ausgewählten Trägeroxide in Wasser suspendiert. Sodann werden Platin und/oder Palladium unter Rühren in Form von geeigneten, wasserlöslichen Vorläuferverbindungen wie beispielsweise Palladiumnitrat oder Hexahydroxoplatinsäure zur Suspension hinzugegeben und gegebenenfalls durch Stellung des pH-Wertes und/oder durch Zugabe eines Hilfsreagenzes auf dem Trägermaterial fixiert. Alternativ dazu kann das Edelmetall auch in Analogie zu dem in der EP 1 101 528 A2 beschriebenen Verfahren auf das Trägermaterial appliziert werden.

Die so erhaltenen Suspensionen werden dann vermahlen und nach einem der herkömmlichen Beschichtungsverfahren auf den Tragkörper aufgebracht. Nach jedem Beschichtungsschritt erfolgt die Trocknung des beschichteten Teils im heißen Luftstrom und gegebenenfalls eine Kalzinierung.

Die oben genannten Vorläuferverbindungen und Hilfsreagenzien sind dem Fachmann geläufig.

Als Tragkörper kommen insbesondere sogenannte Wabenkörper aus Keramik, insbesondere Cordierit, oder aus Metall in Frage. Als Tragkörper werden sogenannte Durchflusswabenkörper verwendet.

Die erfindungsgemäßen Dieseloxidationskatalysatoren eignen sich zur Reinigung der Abgase von Dieselmotoren, insbesondere hinsichtlich Kohlenmonoxid und Kohlenwasserstoffen.

Die vorliegende Erfindung betrifft somit auch ein Verfahren zur Behandlung von Dieselabgasen, das dadurch gekennzeichnet ist, dass das Dieselabgas über einen Dieseloxidationskatalysator wie oben beschrieben und definiert geleitet wird, wobei das Dieselabgas den bei Stirnfläche a in den Tragkörper ein- und bei Stirnfläche b aus dem Tragkörper ausfließt.

Die erfindungsgemäßen Dieseloxidationskatalysatoren werden insbesondere als Bestandteile von Abgasreinigungssystemen verwendet. Entsprechende Abgasreinigungssysteme umfassen neben einem erfindungsgemäßen Dieseloxidationskatalysator beispielsweise einen Dieselpartikelfilter und/oder einen Katalysator zur selektiven katalytischen Reduktion von Stickoxiden, wobei Dieselpartikelfilter und SCR-Katalysator üblicherweise dem erfindungsgemäßen Dieseloxidationskatalysator nachgeschaltet sind, also abströmseitig angeordnet sind. In einer Ausgestaltung des Abgasreinigungssystems ist der SCR-Katalysator auf dem Dieselpartikelfilter angeordnet.

### Beispiel 1

a) Ein handelsübliches rundes Durchflusssubstrat aus Cordierit der Abmessungen 5,66"x4,00" mit der Zelligkeit 400 cpsi und der Wandstärke 6,5 mil wurde ausgehend von einem Ende (entsprechend Stirnfläche a) auf 50% seiner Länge mit einem Washcoat beschichtet, der 48,23 g/L eines handelsüblichen Lanthan-dotierten Aluminiumoxids, 1,00 g/L Strontiumoxid (ex Sr(OH)₂), 0,47086 g/L einer üblichen wasserlöslichen Pd-Verbindung, sowie 0,23543 g/L einer üblichen wasserlöslichen Pt- Verbindung enthielt. Das Pt:Pd-Gewichtsverhältnis betrug 1:2.
b) Das gemäß a) erhaltene beschichtete Substrat wurde über seine gesamte Länge mit einem Washcoat beschichtet, der 49,23 g/L eines Lanthan-dotierten mesoporösen Aluminiumoxids, 0,60540 g/L einer üblichen wasserlöslichen Pt-Verbindung, sowie 0,10090 g/L einer üblichen wasserlöslichen Pd-Verbindug enthielt. Das Pt:Pd-Gewichtsverhältnis betrug 6:1.

### Beispiel 2

a) In Analogie zum in Beispiel 1 beschriebenen Verfahren wurde ein handelsübliches rundes Durchflusssubstrat aus Cordierit der Abmessungen 5,66"x4,00" mit der Zelligkeit 400 cpsi und der Wandstärke 6,5 mil ausgehend von einem Ende (entsprechend Stirnfläche a) auf 80% seiner Länge mit einem Washcoat beschichtet, der 8,3 g/ft³ (0,293 g/L) Platin und Palladium im Gewichtsverhältnis von 1:1 umfasste.
b) Das gemäß a) erhaltene beschichtete Substrat wurde über seine gesamte Länge mit einem Washcoat beschichtet, der 13,4 g/ft³ (0,473 g/L) Platin und Palladium im Gewichtsverhältnis von 3:1 umfasste.,

Das Gesamtverhältnis Pt: Pd über den gesamten Katalysator betrug 2:1.

### Vergleichsbeispiel 1

a) In Analogie zum in Beispiel 1 beschriebenen Verfahren wurde ein handelsübliches rundes Durchflusssubstrat aus Cordierit der Abmessungen 5,66"x4,00" mit der Zelligkeit 400 cpsi und der Wandstärke 6,5 mil über seine gesamte Länge mit einem Washcoat beschichtet, der 10,1 g/ft³ (0,357 g/L) Platin und Palladium im Gewichtsverhältnis von 1,4 :1 umfasste.
b) Das gemäß a) erhaltene beschichtete Substrat wurde über seine gesamte Länge mit einem Washcoat beschichtet, der 9,9 g/ft³ (0,350 g/L) Platin und Palladium im Gewichtsverhältnis von 3:1 umfasste

Das Gesamtverhältnis Pt: Pd über den gesamten Katalysator betrug 2:1.

Vergleichsbeispiel 1 ist analog zu Beispiel 6 der US2008/045405.

### Beispiel 3

a) In Analogie zum in Beispiel 1 beschriebenen Verfahren wurde ein handelsübliches rundes Durchflusssubstrat aus Cordierit der Abmessungen 5,66"x4,00" mit der Zelligkeit 400 cpsi und der Wandstärke 6,5 mil ausgehend von einem Ende (entsprechend Stirnfläche a) auf 80% seiner Länge mit einem Washcoat beschichtet, der 18 g/ft3 (0,636 g/L) Platin und Palladium im Gewichtsverhältnis von 1:1 umfasste.
b) Das gemäß a) erhaltene beschichtete Substrat wurde über seine gesamte Länge mit einem Washcoat beschichtet, der 5,6 g/ft³ (0,198 g/L) Platin und Palladium im Gewichtsverhältnis von 6:1 umfasste

Das Gesamtverhältnis Pt: Pd über den gesamten Katalysator betrug 1,5:1.

### Vergleichsbeispiel 2

a) In Analogie zum in Beispiel 1 beschriebenen Verfahren wurde ein handelsübliches rundes Durchflusssubstrat aus Cordierit der Abmessungen 5,66"x4,00" mit der Zelligkeit 400 cpsi und der Wandstärke 6,5 mil über seine gesamte Länge mit einem Washcoat beschichtet, der 17,5 g/ft³ (0,618 g/L) Platin und Palladium im Gewichtsverhältnis von 1:2 umfasste.
b) Das gemäß a) erhaltene beschichtete Substrat wurde ausgehend von einem Ende (entsprechend Stirnfläche a) auf 50% seiner Länge mit einem Washcoat beschichtet, der 5 g/ft3 (0,177 g/L) Platin und Palladium im Gewichtsverhältnis von 1:2 umfasste

Das Gesamtverhältnis Pt:Pd über den gesamten Katalysator betrug 1.2.

Vergleichsbeispiel 2 ist analog zu Katalysator Y der WO2010/133309 A1.

### Vergleichsversuche

Mit den Beispielen 2 und 3, sowie den Vergleichsbeispielen 1 und 2 wurden sogenannte Heat-Up-Experimente durchgeführt. Dazu wurde an einem herkömmlichen Pkw-Motorprüfstand (2.0 L Hubraum, 4 Zylinder, Diesel, TDI, Common Rail) mittels sekundärer Kraftstoff-Einspritzung durch katalytische Verbrennung eben jenes Kraftstoffes über dem jeweils zu messenden Dieseloxidationskatalysator Energie in Form von Wärme freigesetzt (exotherm).

In einem ersten Motorbetriebspunkt (MBP1) wurde eine konstante Vor-Katalysator-Temperatur von 320°C eingestellt. Anschließend wurde in genau definierten Schritten durch Einspritzung exakt berechneter Mengen an Dieselkraftstoff eine theoretisch zu erwartende Nach-Katalysator-Temperatur erreicht (oder nicht erreicht). Ziel ist es, in vier definierten, äquidistanten Stufen schrittweise von der gegebenen Vor-Katalysator-Temperatur eine Nach-Katalysator-Temperatur von ca. 550 °C zu realisieren. Diese vierstufige Prozedur bei einer Vor-Katalysator-Temperatur von 320 °C wird im Anschluss daran nochmals bei Vor-Katalysator-Temperaturen von 310 °C in einem Motorbetriebspunkt 2 (MBP2), in einem Motorbetriebspunkt 3 (MBP3) bei 300 °C Vor-Katalysator-Temperatur und in einem Motorbetriebspunkt 4 (MBP4) bei 290 °C Vor-Katalysator-Temperatur wiederholt.

Tendenziell ist MBP4 wichtiger zu bewerten als MBP3, MBP3 wichtiger als MBP2, und letzterer wiederum wichtiger als MBP1, da es immer schwieriger wird, bei tieferen Vor-Katalysator-Temperatur durch ein exzellentes ZündVerhalten die geforderte Wärme zu generieren.

In diesem Test wird die Eignung eines Oxidationskatalysators geprüft, die thermische Regeneration eines nachgeschalteten Dieselpartikelfilters zu initiieren. Je höher die erreichte Temperatur ist, desto besser ist der Oxidationskatalysator geeignet.

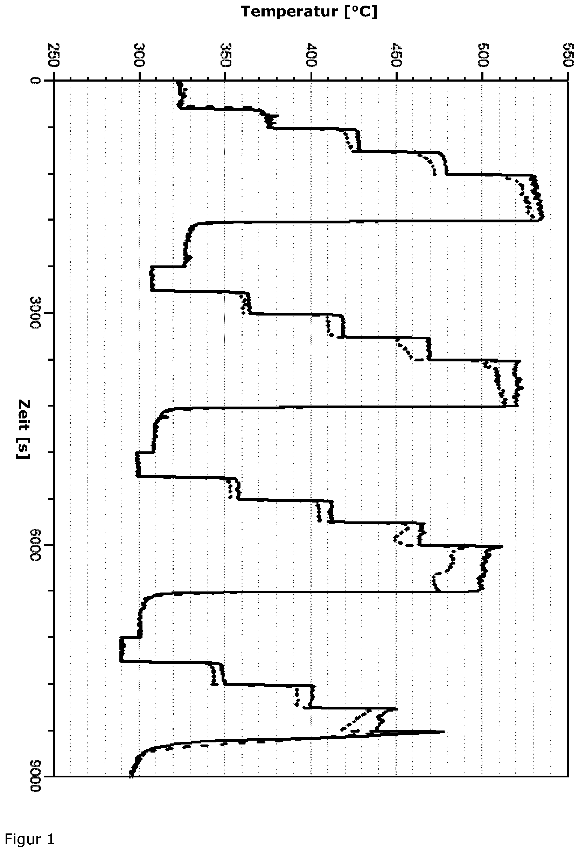

Figur 1 zeigt den Vergleich von Beispiel 2 (durchgezogene Linie) mit Vergleichsbeispiel 1 (gestrichelte Linie). Demnach erzeugt Beispiel 2 eine deutlich höhere Exothermie als Vergleichsbeispiel 1 und eignet sich somit besser, die thermische Regeneration eines nachgeschalteten Dieselpartikelfilters zu initiieren.

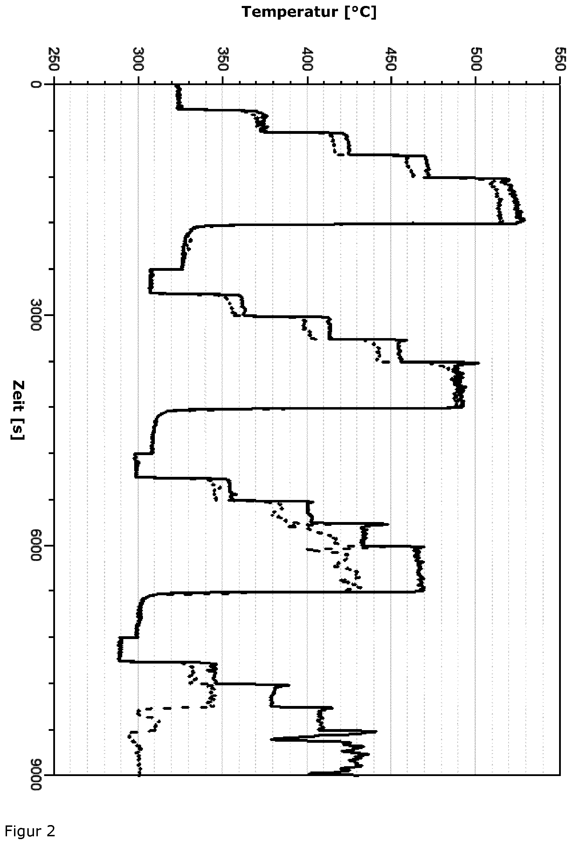

Figur 2 zeigt den Vergleich von Beispiel 3 (durchgezogene Linie) mit Vergleichsbeispiel 2 (gestrichelte Linie). Demnach erzeugt Beispiel 3 eine deutlich höhere Exothermie als Vergleichsbeispiel 2 und eignet sich somit besser, die thermische Regeneration eines nachgeschalteten Dieselpartikelfilters zu initiieren.

## Patentansprüche

1. Dieseloxidationskatalysator, der
einen Tragkörper mit einer Länge L, die sich zwischen einer ersten Stirnfläche a und einer zweiten Stirnfläche b erstreckt und
auf dem Tragkörper angeordnete, unterschiedlich zusammengesetzte katalytisch aktive Materialzonen A und B umfasst, wobei
- Materialzone A Palladium oder Platin und Palladium in einem Gewichtsverhältnis Pt : Pd von ≤ 1 enthält und sich ausgehend von Stirnfläche a auf 20 bis 80% der Länge L erstreckt, und
- Materialzone B Platin und Palladium in einem Gewichtsverhältnis Pt : Pd von < 10 enthält, und sich auf 80 bis 100% der Länge L erstreckt, und
wobei Materialzone B über Materialzone A angeordnet ist und das Gewichtsverhältnis Pt : Pd bezogen auf die Materialzonen A und B 1,5 bis 3,0 beträgt
und wobei der Tragkörper ein Durchflusswabenkörper ist.

2. Dieseloxidationskatalysator gemäß Anspruch 1, **dadurch gekennzeichnet, dass** in den Materialzonen A und B Palladium oder Platin und Palladium auf einem Trägeroxid vorliegen.

3. Dieseloxidationskatalysator gemäß Anspruch 2, **dadurch gekennzeichnet, dass** die Trägeroxide in den Materialzonen A und B gleich oder verschieden voneinander sind und ausgewählt sind aus der Reihe bestehend aus Aluminiumoxid, dotiertes Aluminiumoxid, Siliziumoxid, Titandioxid und Mischoxiden aus einem oder mehreren davon.

4. Dieseloxidationskatalysator gemäß einem oder mehreren der Ansprüche 1 bis 3, **dadurch gekennzeichnet, dass** Materialzone A ein Erdalkalimetall enthält

5. Dieseloxidationskatalysator gemäß Anspruch 4, **dadurch gekennzeichnet, dass** das Erdalkalimetall in Materialzone A Strontium oder Barium oder Strontium und Barium ist.

6. Dieseloxidationskatalysator gemäß einem oder mehreren der Ansprüche 1 bis 5, **dadurch gekennzeichnet, dass** die Länge der Materialzone B 95% oder 100% der Gesamtlänge L des Tragkörpers.

7. Verfahren zur Behandlung von Dieselabgasen, **dadurch gekennzeichnet, dass** das Dieselabgas über einen Dieseloxidationskatalysator gemäß einem oder mehreren der Ansprüche 1 bis 6 geleitet wird, wobei das Dieselabgas den bei Stirnfläche a in den Tragkörper ein- und bei Stirnfläche b aus dem Tragkörper ausfließt.

8. Vorrichtung zur Reinigung der Abgase von Dieselmotoren, die einen Dieseloxidationskatalysator nach einem der Ansprüche 1 bis 6 aufweist.

9. Vorrichtung nach Anspruch 8, **dadurch gekennzeichnet, dass** der Dieseloxidationskatalysator nach einem der Ansprüche 1 bis 6 einem Dieselpartikelfilter und/oder einem Katalysator zur selektiven katalytischen Reduktion von Stickoxiden vorgeschaltet ist.

## Claims

1. Diesel oxidation catalyst comprising
a carrier body having a length L extending between a first end face a and a second end face b, and
variously composed catalytically active material zones A and B arranged on the carrier body, wherein
- material zone A contains palladium or platinum and palladium in a weight ratio Pt: Pd of ≤ 1 and extends starting from end face a over 20 to 80% of length L, and
- material zone B contains platinum and palladium in a weight ratio Pt: Pd of < 10 and extends over 80 to 100% of length L, and
wherein material zone B is arranged above material zone A and the weight ratio Pt: Pd relative to the material zones A and B is 1.5 to 3.0
and wherein the support body is a flow-through honeycomb element.

2. The diesel oxidation catalyst according to claim 1, **characterized in that** in the material zones A and B, palladium or platinum and palladium are present on a carrier oxide.

3. The diesel oxidation catalyst according to claim 2, **characterized in that** the carrier oxides in material zones A and B are identical to or different from one another and are selected from the group consisting of aluminum oxide, doped aluminum oxide, silicon oxide, titanium dioxide and mixed oxides of one or more thereof.

4. The diesel oxidation catalyst according to any one or more of claims 1 to 3, **characterized in that** material zone A contains an alkaline earth metal.

5. The diesel oxidation catalyst according to claim 4, **characterized in that** the alkaline earth metal in material zone A is strontium or barium or strontium and barium.

6. The diesel oxidation catalyst according to any one or more of claims 1 to 5, **characterized in that** the length of the material zone is 95% or 100% of the total length L of the carrier body.

7. A method for treating diesel exhaust gases, **characterized in that** the diesel exhaust gas is conducted through a diesel oxidation catalyst according to any one or more of claims 1 to 6, wherein the diesel exhaust gas flows into the carrier body at the end face a and flows out of the carrier body at the end face b.

8. A device for purifying exhaust gases from diesel engines, having a diesel oxidation catalyst according to any one of claims 1 to 6.

9. The device according to claim 8, **characterized in that** the diesel oxidation catalyst according to any one of claims 1 to 6 is arranged upstream of a diesel particulate filter and/or a catalyst for the selective catalytic reduction of nitrogen oxides.

## Revendications

1. Catalyseur d'oxydation pour diesel, lequel comprend
un corps de support ayant une longueur L, qui s'étend entre une première surface frontale a et une deuxième surface frontale b et
des zones matérielles A et B à activité catalytique de compositions différentes disposées sur le corps de support,
- la zone matérielle A contenant du palladium ou du platine et du palladium dans un rapport pondéral Pt : Pd ≤ 1 et s'étendant, partant de la face frontale a, sur 20 à 80 % de la longueur L et
- la zone matérielle B contenant du platine et du palladium dans un rapport pondéral Pt : Pd < 10 et s'étendant sur 80 à 100 % de la longueur L et
la zone matérielle B étant disposée au-dessus de la zone matérielle A et le rapport pondéral Pt : Pd sur la base des zones matérielles A et B étant de 1,5 à 3,0
et le corps de support étant un corps alvéolaire d'écoulement.

2. Catalyseur d'oxydation pour diesel selon la revendication 1, **caractérisé en ce que**, dans les zones matérielles A et B, le palladium ou le platine et le palladium sont présents sur un oxyde porteur.

3. Catalyseur d'oxydation pour diesel selon la revendication 2, **caractérisé en ce que** les oxydes porteurs dans les zones matérielles A et B sont identiques ou différents l'un de l'autre et sont choisis dans la série constituée d'oxyde d'aluminium, d'oxyde d'aluminium dopé, d'oxyde de silicium, de dioxyde de titane et d'oxydes mixtes d'un ou plusieurs de ceux-ci.

4. Catalyseur d'oxydation pour diesel selon l'une ou plusieurs des revendications 1 à 3, **caractérisé en ce que** la zone matérielle B contient un métal alcalino-terreux.

5. Catalyseur d'oxydation pour diesel selon la revendication 4, **caractérisé en ce que** le métal alcalino-terreux dans la zone matérielle A est le strontium ou le baryum ou le strontium et le baryum.

6. Catalyseur d'oxydation pour diesel selon l'une ou plusieurs des revendications 1 à 5, **caractérisé en ce que** la longueur de la zone matérielle B représente 95 % ou 100 % de la longueur totale L du corps de support.

7. Procédé pour le traitement de gaz d'échappement de moteur diesel, **caractérisé en ce que** le gaz d'échappement de moteur diesel est guidé à travers un catalyseur d'oxydation pour diesel selon l'une ou plusieurs des revendications 1 à 6, le gaz d'échappement de moteur diesel entrant au niveau de la surface frontale a dans le corps de support et sortant au niveau de la surface frontale b du corps de support.

8. Dispositif d'épuration des gaz d'échappement de moteurs diesel, qui présente un catalyseur d'oxydation pour diesel selon l'une quelconque des revendications 1 à 6.

9. Dispositif selon la revendication 8, **caractérisé en ce que** le catalyseur d'oxydation pour diesel selon l'une quelconque des revendications 1 à 6 est précédé d'un filtre à particules diesel et/ou d'un catalyseur pour la réduction catalytique sélective des oxydes d'azote.
